# FASCICULE DE BREVET EUROPEEN

(11) **EP 2 383 166 B1**
(45) Date de publication et mention de la délivrance du brevet: **31.12.2014**
(21) Numéro de dépôt: 11161143.0
(22) Date de dépôt: 05.04.2011
(51) Int. Cl.: B62D 3/12, B62D 5/04, B62D 5/06, B62D 5/22

(54) **Dispositif d'assemblage de carters pour système de direction**
Vorrichtung zur Montage von Gehäusen für ein Lenksystem
Device for assembly of casings of a steering system

(30) Priorité: 27.04.2010 FR 1053197
(43) Date de publication de la demande: 02.11.2011
(73) Titulaire: JTEKT Europe, 69540 Irigny (FR)
(72) Inventeur: Pantale, David, 69126 Brindas (FR)
(74) Mandataire: Chevalier, Renaud Philippe

(56) Documents cités:
- DE-U1- 29 822 719
- FR-A1- 2 777 629
- GB-A- 2 051 714
- US-A- 5 285 864

## Description

La présente invention se rapporte, d'une manière générale, aux systèmes de direction des véhicules automobiles. Plus particulièrement, cette invention concerne un dispositif d'assemblage de carters dans un système de direction. Cette invention est applicable notamment, dans un système de direction assistée pour véhicule automobile, à l'assemblage d'un carter de capteur de couple ou un carter de capteur d'angle sur un carter de direction principal, le carter de capteur de couple étant préférentiellement un carter en matière plastique moulée.

Certains systèmes de direction, équipant les véhicules automobiles, comprennent un carter de direction principal dans lequel est logée et montée coulissante la crémaillère, et un carter secondaire situé au point de raccordement de la colonne de direction et logeant un capteur, tel qu'un capteur de couple ou un capteur d'angle, utilisé pour piloter l'assistance de la direction. Les deux carters sont habituellement assemblés l'un à l'autre au moyen de vis. L'assemblage des deux carters est rendu étanche, notamment au moyen d'un joint mis en place dans le plan de jonction de ces carters, pour permettre à la direction de résister aux conditions atmosphériques et aux projections d'eau, lors du roulage du véhicule ou à l'occasion d'un lavage à haute pression. L'étanchéité peut être renforcée en prévoyant, sur l'un des deux carters, une collerette de protection qui dépasse de ce carter en entourant le plan de jonction, et qui recouvre ainsi en partie l'autre carter, une hauteur suffisante étant donnée à la collerette, comme décrit dans la demande de brevet français n° 09.59181 déposée le 18 décembre 2009 au nom du Demandeur.

Lors de l'assemblage des deux carters, que l'un d'eux comporte ou non une collerette de protection, il convient que ces carters soient convenablement positionnés et orientés l'un relativement à l'autre, en particulier que le carter du capteur de couple ou du capteur d'angle soit parfaitement positionné et orienté par rapport au capteur principal de la direction. De plus, si par exemple plusieurs types de carters de capteur sont disponibles, il convient de s'assurer que le carter de capteur à assembler est bien celui prévu pour équiper le carter de direction principal concerné. Ces souhaits ne sont actuellement pas satisfaits, d'où une difficulté d'assemblage des carters de capteur et des risques d'erreurs de montage, ou du moins des tâtonnements pour l'obtention d'un positionnement et d'une orientation corrects d'un carter sur l'autre, d'autant plus que les carters de capteur possèdent habituellement une forme générale circulaire qui ne facilite pas leur orientation visuelle.

Le brevet US 5285864 divulgue deux moitiés de carter de direction, positionnées relativement à des organes internes au carter, qui sont une valve d'assistance et un cylindre de vérin d'assistance. Ce document ne prévoit donc pas des parties de carter pouvant être directement positionnées et orientées l'une par rapport à l'autre, indépendamment des organes placés à l'intérieur du carter, d'autant plus que les parties de carter présentent des plans de joint parfaitement lisses.

Le document de brevet FR 2777629 A1 prévoit des parties de carter à réunir dont les plans de joint sont, eux aussi, parfaitement lisses et dépourvus de toutes singularités qui permettraient un positionnement relatif, avant introduction des vis d'assemblage et indépendamment de ces vis. Les parties de carter à assembler possèdent ici un contour non circulaire, mais celui-ci n'est pas mis à profit pour réaliser mécaniquement une orientation d'une partie relativement à l'autre

La présente invention vise à apporter une solution au problème ici soulevé, donc à faciliter l'assemblage de deux carters du genre ici concerné et à garantir que cet assemblage soit correctement réalisé, sans risque d'erreur, par des moyens simples et économiques.

A cet effet, l'invention a pour objet un dispositif d'assemblage de carters pour système de direction de véhicule automobile, en particulier un dispositif d'assemblage d'un carter de capteur de couple ou d'angle sur un carter de direction principal, dans un système de direction assistée, l'assemblage des deux carters étant réalisé suivant un plan de jonction notamment au moyen de vis, de préférence avec interposition de moyens d'étanchéité, ce dispositif d'assemblage étant caractérisé par le fait que les deux carters à assembler comportent, dans la zone du plan de jonction, des moyens complémentaires formant un système de détrompage qui coopèrent, lors du montage d'un carter sur l'autre, pour positionner et orienter l'un des carters par rapport à l'autre.

Ainsi, l'invention propose un système de « détrompage », lequel permet par exemple de positionner et d'orienter convenablement un carter de capteur par rapport à un carter de direction principal, lors de l'assemblage des deux carters. De plus, ce système permet de s'assurer que le type de carter de capteur par exemple, que l'on souhaite assembler, est bien celui qui est destiné au carter de direction principal prévu.

Dans un mode de réalisation de l'invention, l'un des carters à assembler comporte, dans la zone du plan de jonction, au moins une forme en relief dépassant du plan de jonction, tandis que l'autre carter présente au moins une forme complémentaire en creux prévue pour recevoir la forme en relief correspondante.

La forme en relief de l'un des carters à assembler peut être constituée par une nervure de ce carter, s'étendant perpendiculairement au plan de jonction, tandis que la forme complémentaire en creux de l'autre carter est une encoche apte à recevoir la nervure.

Dans une variante, la forme en relief de l'un des carters à assembler est constituée par un picot de ce carter, dépassant perpendiculairement au plan de jonction, tandis que la forme complémentaire en creux de l'autre carter est une encoche ou un logement apte à recevoir le picot.

Dans tous les cas, on prévoit ainsi sur le carter de capteur de couple ou d'angle, ou sur un autre carter annexe au moins une forme « mâle » qui, dépassant du plan d'assemblage de ce carter annexe avec le carter de direction principal, coopère de façon unique avec une forme « femelle » prévue dans le carter de direction principal, de manière à assurer le positionnement et l'orientation d'un carter par rapport à l'autre. De préférence, l'engagement de la ou chaque forme en relief de l'un des carters à assembler, dans la forme complémentaire en creux de l'autre carter, est prévu avec un jeu afin d'éviter toute contrainte lors de l'assemblage en grande série de ces carters, le serrage final d'un carter sur l'autre étant réalisé au moyens de vis, indépendamment des moyens de positionnement et d'orientation.

Avantageusement, la ou chaque forme en relief de l'un des carters à assembler est obtenue directement par moulage, lors de la fabrication de ce carter, en particulier dans le cas d'un carter de capteur en matière plastique. Ainsi, la ou les formes en relief sont obtenues sans aucun usinage, ce qui permet d'intégrer ces formes sans difficulté ni coût supplémentaire et avec une grande précision et reproductivité, au niveau du plan de jonction.

D'une manière similaire, la ou chaque forme en creux de l'autre carter peut également être obtenue par moulage, dans la mesure où cet autre carter est lui aussi une pièce moulée, par exemple en aluminium dans le cas d'un carter de direction principal. Là aussi, la ou les formes en creux sont obtenues sans aucun usinage ni coût supplémentaire, et elles résultent directement de la conformation donnée par le moule de fabrication.

Ces formes respectivement en relief et en creux permettent, au minimum, un « détrompage » lors du montage du carter de capteur de couple ou de capteur d'angle, ou autre carter annexe, sur le carter de direction principal; de plus, elles permettent de « détromper » plusieurs modèles de carters entre eux, c'est-à-dire qu'elles obligent par exemple à monter le « bon » carter de capteur sur un carter de direction principal donné.

Comme on le comprend, on peut ici multiplier les combinaisons en jouant sur le nombre, la position et la conformation de ces formes en relief et en creux, par exemple en prévoyant des picots qui peuvent être cylindriques ou de section cruciforme ou polygonale telle qu'en triangle, en étoile, etc.

Dans le cas d'un carter à assembler comportant une collerette de protection qui dépasse du plan de jonction, la forme en relief, du genre nervure de ce carter peut être formée sur cette collerette, en particulier sur la face intérieure de cette collerette.

Cependant, lorsque l'invention est appliquée à l'assemblage de deux carters dont l'un comporte une collerette de protection dépassant du plan de jonction en entourant celui-ci, il est avantageux que les moyens de positionnement et d'orientation comprennent au moins une déformation locale saillante vers l'extérieur ou vers l'intérieur, prévue sur la collerette de protection, tandis que l'autre carter présente au moins une forme correspondante, en relief ou en creux.

Ainsi, la présence de la collerette sur le carter de capteur ou autre capteur annexe est mise à profit, par une adaptation locale de sa forme prévue pour coïncider avec une forme identique prévue sur le carter de direction principal, pour imposer une position unique de montage d'un carter sur l'autre. cette adaptation se faisant sans aucun ajout de matière. De plus, la ou chaque déformation saillante vers l'extérieur ou vers l'intérieur peut être obtenue directement par moulage, avec la collerette de protection du carter de capteur de couple ou de capteur d'angle, si ce carter est en matière plastique, ce qui rend la solution particulièrement économique, en supprimant toute opération supplémentaire et tout rajout de matière lors de la fabrication du carter concerné.L'autre carter tel que le carter de direction principal pourra, lui aussi, être obtenu directement avec la ou les formes souhaitées, dans la mesure où ce carter est moulé.

L'invention sera mieux comprise à l'aide de la description qui suit, en référence au dessin schématique annexé représentant, à titre d'exemples, quelques formes d'exécution de ce dispositif d'assemblage de carters.
Figure 1 est une vue partielle et partiellement en coupe d'un carter de direction principal, prévu pour recevoir un carter de capteur à assembler par un dispositif conforme à l'invention,
Figure 2 est une vue partielle, face au plan de jonction, de ce carter de direction principal, suivant la flèche F2 de figure 1,
Figure 3 est une vue de face du carter de capteur à assembler au carter principal des figures 1 et 2,
Figure 4 est une vue en coupe passant par l'axe central du carter de capteur de la figure 3,
Figure 5 est une vue partielle, et partiellement en coupe, d'un carter de direction principal prévu pour recevoir un carter de capteur, à assembler par une variante du dispositif des figures 1 à 4,
Figure 6 est une vue partielle, face au plan de jonction, du carter de direction de la figure 5, suivant la flèche F6,
Figure 7 est une vue de face du carter de capteur à assembler au carter principal des figures 5 et 6,
Figure 8 est une vue en coupe passant par l'axe central du carter de capteur de la figure 7,
Figure 9 est une vue partielle, et partiellement en coupe, d'un carter de direction principal prévu pour recevoir un carter de capteur, à assembler par un autre mode de réalisation du dispositif de l'invention,
Figure 10 est une vue partielle, face au plan de jonction, du carter de direction de la figure 9, suivant la flèche F10,
Figure 11 est une vue de face du capteur de couple à assembler au carter principal des figures 9 et 10.

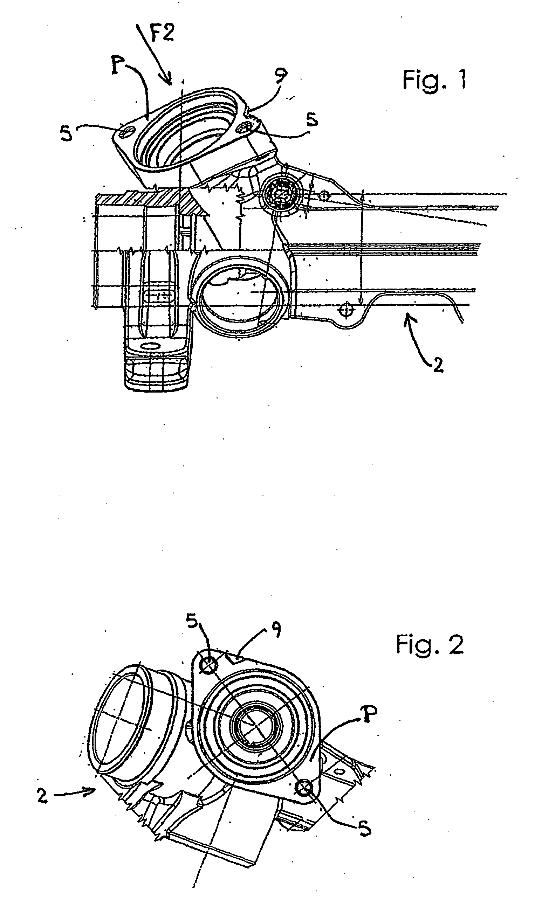

En se référant d'abord aux figures 1 à 4, on considère un carter de direction principal 2, de forme générale allongée, sur lequel doit être assemblé un carter de capteur 3.

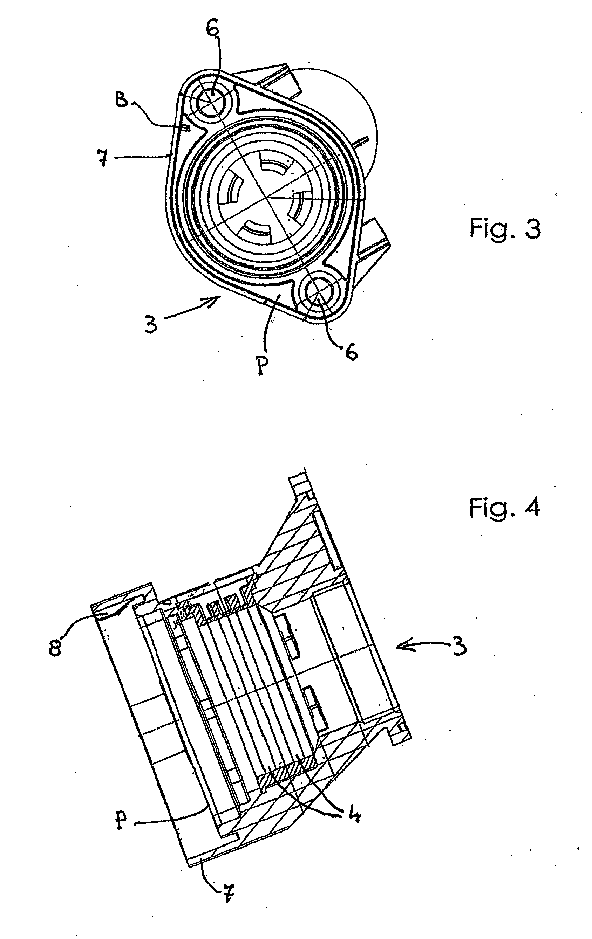

Le carter de capteur 3 appartient ici à un capteur de couple, lequel est un capteur pourvu de bagues collectrices 4 (voir figure 4). Ce carter de capteur 3, de conformation générale cylindrique, est réalisé en matière plastique moulée.

De manière connue, le carter de capteur 3 est assemblé sur le carter de direction principal 2, suivant un plan de jonction P, au moyen de deux vis de fixation diamétralement opposées, introduites dans des trous correspondants 5 et 6 ménagés respectivement dans le carter principal 2 et dans le carter de capteur 3. Un joint d'étanchéité est avantageusement interposé entre les deux carters 2 et 3 à assembler.

Dans l'exemple d'application illustré, le carter de capteur 3 comporte encore une collerette de protection 7 périphérique, qui dépasse de ce carter en entourant le plan de jonction P, et qui prend place autour d'une partie du carter principal 2 lorsque les deux carters sont assemblés.

Pour faciliter l'assemblage de ces deux carters 2 et 3, on prévoit sur ceux-ci des moyens de positionnement et d'orientation.

Ces moyens comprennent, sur le carter de capteur 3, une conformation en relief qui, dans le mode de réalisation des figures 1 à 4, se présente comme une nervure 8 s'étendant perpendiculairement au plan de jonction P. La nervure 8 est formée sur la face intérieure de la collerette de protection 7, comme le montre plus particulièrement la figure 4.

Lesdits moyens comprennent aussi, sur le carter principal 2, une conformation constituant le complément de la nervure 8, se présentant comme une encoche 9 située dans le plan de jonction P, par exemple à proximité de l'un des trous 5 de ce carter 2, comme le montre plus particulièrement la figure 2.

Ainsi, lors du montage du carter de capteur 3 sur le carter principal 2, l'opérateur doit faire coïncider la nervure 8 avec l'encoche 9, ce qui positionne et oriente de manière unique le carter de capteur 3 relativement au carter principal 2. Cet « appairage » se fait de préférence avec un jeu, afin d'éviter toute contrainte.

Le carter de capteur 3 étant réalisé en matière plastique moulée, avec sa collerette de protection 7, la nervure 8 peut être obtenue directement de moulage. De même, si le carter principal 2 est une pièce moulée, par exemple en aluminium, son encoche 9 peut être obtenue elle aussi par moulage, sans usinage.

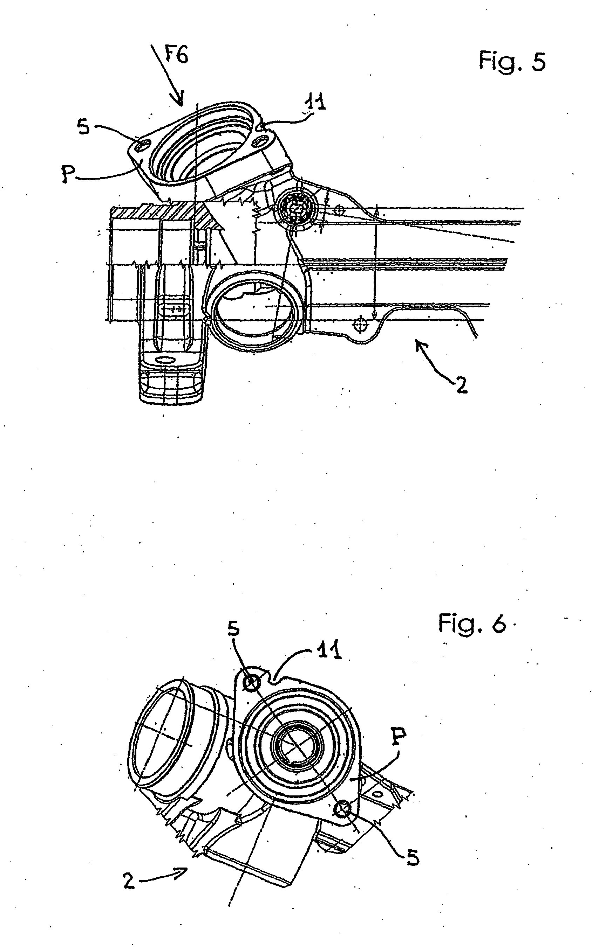

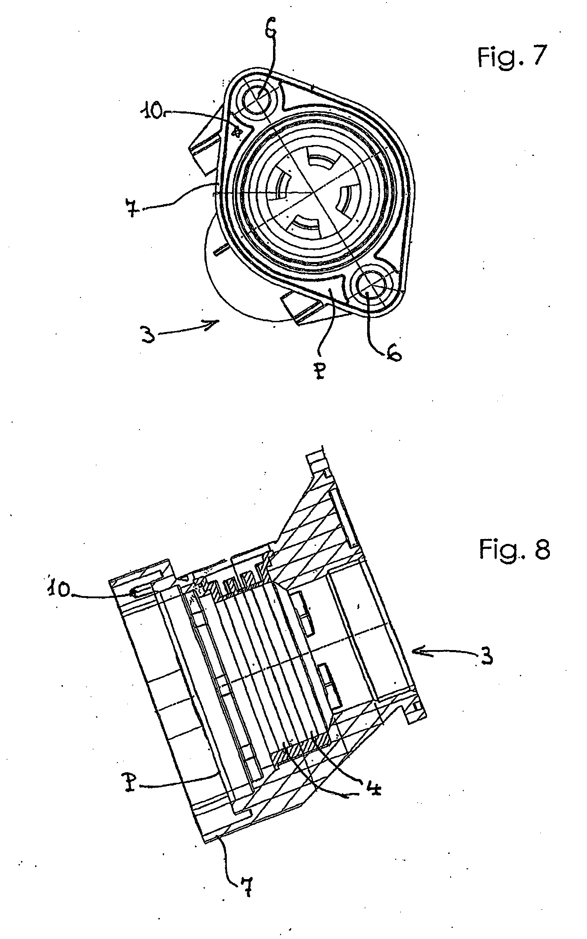

Dans une variante illustrée par les figures 5 à 8 sur lesquelles les éléments correspondant à ceux déjà décrits sont désignés par les mêmes références, les moyens de positionnement et d'orientation comprennent, sur le carter de capteur 3, un picot 10 qui dépasse du plan de jonction P, perpendiculairement à ce plan P. Le picot 10 possède par exemple une section cruciforme, et il se situe à faible distance de la collerette de protection 7, du côté intérieur de celle-ci. Le picot 10 est prévu pour s'engager dans un logement 11 complémentaire, en forme d'encoche, formé sur le carter principal 2 dans le plan de jonction P.

Dans ce cas aussi, le picot 10 et le logement 11 peuvent être obtenus directement de moulage, respectivement avec le carter de capteur 3 et avec le capteur principal 2.

Comme on le comprend, la variante des figures 5 à 8 peut être envisagée aussi pour un carter de capteur 3 dépourvu de collerette de protection.

Dans tous les cas, on obtient ainsi un système de « détrompage », lequel permet d'être certain, lors de l'assemblage du carter de capteur 3 sur le carter principal 2, du bon positionnement et de l'orientation correcte du carter de capteur 3 relativement au du carter principal 2. Le système de « détrompage » peut être rendu plus fiable en prévoyant sur le carter de capteur 3 plusieurs nervures telles que la nervure 8 ou plusieurs picots tels que le picot 10, les encoches du carter principal 2 étant elles aussi multiples dans ce cas.

Par le choix du nombre et de la position des nervures ou des picots, on réalise un système de « détrompage » qui, tout en facilitant l'assemblage des deux carters 2 et 3, permet de s'assurer en outre que le carter de capteur 3 que l'on veut monter est effectivement celui prévu pour être assemblé à un carter principal 2 donné.

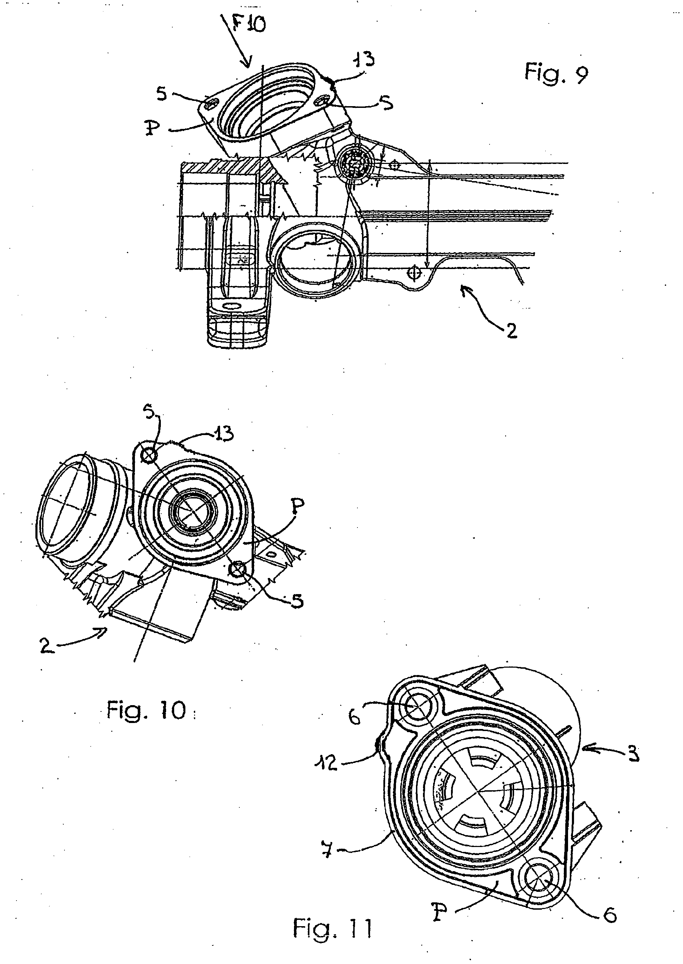

Les figures 9 à 11 illustrent un autre mode de réalisation, applicable à un carter de capteur 3 pourvu d'une collerette de protection 7. Les moyens de positionnement et d'orientation sont ici constitués, pour le carter de capteur 3, par une déformation locale 12 de la collerette de protection 7, la déformation 12 étant dirigée ici vers le côté extérieur de cette collerette, comme le montre la figure 11. Sur le carter de direction principal 2, il est prévu une forme correspondante 13, ici en relief et présentant l'aspect d'un bossage, comme le montre plus particulièrement la figure 12. Ces formes sont obtenues directement par moulage. Par leur mise en coïncidence, on réalise le positionnement et l'orientation du carter de capteur 3 relativement au carter principal 2, une position relative unique de montage d'un carter vis-à-vis de l'autre étant ainsi imposée. Dans le même souci de fiabilité que précédemment, les formes telles que celles 12 et 13 peuvent être plus nombreuses.

On ne s'éloignerait pas du cadre de l'invention, telle que définie dans les revendications annexées :
- en multipliant, pour un assemblage de carters, les moyens tels que nervures, picots ou autres formes, prévus sur l'un des carters, et les moyens complémentaires prévus de façon correspondante sur l'autre carter,
- en réalisant le « détrompage » au moyen de toutes parties ou formes appropriées pouvant faire saillie vers l'extérieur ou vers l'intérieur, et pouvant être obtenues par tous procédés ou techniques,
- en appliquant l'invention à l'assemblage de carters pouvant loger tous éléments mécaniques, électriques ou autres, et pouvant être assemblés au moyen de vis en nombre quelconque, ou par d'autres moyens avec ou sans interposition ou rajout de moyens d'étanchéité, l'invention pouvant ainsi être appliquée non seulement au montage d'un carter de capteur de couple mais aussi à un carter de capteur d'angle, ou plus généralement à tout capteur annexe à assembler à un carter principal, ou encore à un carter intermédiaire par exemple l'assemblage d'un capteur de couple non pas directement sur le carter principal de la direction mais avec un capteur de réducteur,
- en destinant l'invention à des systèmes de direction de tous types, en particulier des directions assistées pouvant être hydrauliques ou électriques, et dans ce dernier cas avec un moteur d'assistance agissant au niveau de la colonne de direction ou du pignon de direction ou encore directement sur la crémaillère.

## Revendications

1. Dispositif d'assemblage de carters pour système de direction de véhicule automobile, en particulier dispositif d'assemblage d'un carter de capteur de couple (3) ou de capteur d'angle sur un carter de direction principal (2), dans un système de direction assistée, l'assemblage des deux carters (2, 3) étant réalisé suivant un plan de jonction (P) notamment au moyen de vis, de préférence avec interposition de moyens d'étanchéité, **caractérisé en ce que** les deux carters (2, 3) à assembler comportent, dans la zone du plan de jonction (P), des moyens complémentaires (8, 9 ; 10, 11 ; 12, 13) formant un système de détrompage qui coopèrent, lors du montage d'un carter (3) sur l'autre (2), pour positionner et orienter l'un des carters par rapport à l'autre.

2. Dispositif d'assemblage de carters selon la revendication 1, **caractérisé en ce que** l'un des carters (3)à assembler comporte, dans la zone du plan de jonction (P), au moins une forme en relief (8, 10) dépassant du plan de jonction (P), tandis que l'autre carter (2) présente au moins une forme complémentaire en creux (9, 11) prévue pour recevoir la forme en relief (8, 10) correspondante.

3. Dispositif d'assemblage de carters selon la revendication 2, **caractérisé en ce que** la forme en relief de l'un des carters (3) à assembler est constituée par une nervure (8) de ce carter (3), s'étendant perpendiculairement au plan de jonction (P), tandis que la forme complémentaire en creux de l'autre carter (2) est une encoche (9) apte à recevoir la nervure (8).

4. Dispositif d'assemblage de carters selon la revendication 2, **caractérisé en ce que** la forme en relief de l'un des carters (3) à assembler est constituée par un picot (10) de ce carter (3), dépassant perpendiculairement au plan de jonction (P), tandis que la forme complémentaire en creux de l'autre carter (2) est une encoche ou un logement (11) apte à recevoir le picot (10).

5. Dispositif d'assemblage de carters selon l'une des revendications 2 à 4, **caractérisé en ce que** l'engagement de la ou chaque forme en relief (8, 10) de l'un des carters (3) à assembler, dans la forme complémentaire en creux (9, 11) de l'autre carter (2), est prévu avec un jeu.

6. Dispositif d'assemblage de carters selon l'une des revendications 2 à 5, **caractérisé en ce que** la ou chaque forme en relief (8, 10) de l'un des carters (3) à assembler est obtenue directement par moulage, lors de la fabrication de ce carter (3), en particulier dans le cas d'un carter de capteur en matière plastique.

7. Dispositif d'assemblage de carters selon la revendication 6, **caractérisé en ce que** la ou chaque forme en creux (9, 11) de l'autre carter (2) est obtenue par moulage, cet autre carter (2) étant lui aussi une pièce moulée, par exemple en aluminium dans le cas d'un carter de direction principal.

8. Dispositif d'assemblage de carters selon la revendication 1, appliqué à l'assemblage de deux carters dont l'un (3) comporte une collerette de protection (7) dépassant du plan de jonction (P) en entourant celui-ci, **caractérisé en ce que** les moyens de positionnement et d'orientation comprennent au moins une déformation locale (12) saillante vers l'extérieur ou vers l'intérieur, prévue sur la collerette de protection (7), tandis que l'autre carter (2) présente au moins une forme (13) correspondante, en relief ou en creux.

9. Dispositif d'assemblage de carters selon la revendication 8, appliqué au montage d'un carter de capteur de couple (3) ou d'un carter de capteur d'angle en matière plastique sur un carter de direction principal (2), **caractérisé en ce que** la ou chaque déformation (12) saillante vers l'extérieur ou vers l'intérieur est obtenue directement par moulage, avec la collerette de protection (7) du carter (3) concerné.

## Patentansprüche

1. Vorrichtung zum Zusammenbauen von Gehäusen für eine Kraftfahrzeuglenkung, insbesondere Vorrichtung zum Zusammenbauen eines Gehäuses eines Drehmomentsensors (3) oder eines Winkelsensors auf einem Hauptlenkungsgehäuse (2) bei einer Servolenkung, wobei das Zusammenbauen der beiden Gehäuse (2, 3) entlang einer Verbindungsebene (P) insbesondere anhand von Schrauben, bevorzugt unter Einschiebung von Dichtungsmitteln erfolgt, **dadurch gekennzeichnet, dass** die beiden zusammenzubauenden Gehäuse (2, 3) in dem Bereich der Verbindungsebene (P) ergänzende Mittel (8, 9; 10, 11; 12, 13) umfassen, die bei der Montage eines Gehäuses (3) auf dem anderen (2) ein Unverwechselbarkeitssystem bilden und zusammenwirken, um ein Gehäuse im Verhältnis zu dem anderen zu positionieren und zu orientieren.

2. Vorrichtung zum Zusammenbauen von Gehäusen nach Anspruch 1, **dadurch gekennzeichnet, dass** eines der zusammenzubauenden Gehäuse (3) in dem Bereich der Verbindungsebene (P) mindestens eine erhabene Form (8, 10) umfasst, die über die Verbindungsebene (P) übersteht, während das andere Gehäuse (2) mindestens eine ergänzende vertiefte Form (9, 11) aufweist, die vorgesehen ist, um die entsprechende erhabene Form (8, 10) aufzunehmen.

3. Vorrichtung zum Zusammenbauen von Gehäusen nach Anspruch 2, **dadurch gekennzeichnet, dass** die erhabene Form eines der zusammenzubauenden Gehäuse (3) aus einer Rippe (8) dieses Gehäuses (3) besteht, die sich rechtwinklig zur Verbindungsebene (P) erstreckt, während die ergänzende vertiefte Form des anderen Gehäuses (2) eine Einkerbung (9) ist, die geeignet ist, um die Rippe (8) aufzunehmen.

4. Vorrichtung zum Zusammenbauen von Gehäusen nach Anspruch 2, **dadurch gekennzeichnet, dass** die erhabene Form eines der zusammenzubauenden Gehäuse (3) aus einem Noppen (10) dieses Gehäuses (3) besteht, der rechtwinklig zur Verbindungsebene (P) übersteht, während die ergänzende vertiefte Form des anderen Gehäuses (2) eine Einkerbung oder eine Aufnahme (11) ist, die geeignet ist, um den Noppen (10) aufzunehmen..

5. Vorrichtung zum Zusammenbauen von Gehäusen nach einem der Ansprüche 2 bis 4, **dadurch gekennzeichnet, dass** der Eingriff der oder jeder erhabenen Form (8, 10) von einem der zusammenzubauenden Gehäuse (3) in die ergänzende vertiefte Form (9, 11) des anderen Gehäuses (2) mit Spiel vorgesehen ist.

6. Vorrichtung zum Zusammenbauen von Gehäusen nach einem der Ansprüche 2 bis 5, **dadurch gekennzeichnet, dass** die oder jede erhabene Form (8, 10) eines der zusammenzubauenden Gehäuse (3) bei der Herstellung dieses Gehäuses (3), insbesondere für den Fall eines Sensorgehäuses aus Kunststoff, direkt durch Formen erzielt wird.

7. Vorrichtung zum Zusammenbauen von Gehäusen nach Anspruch 6, **dadurch gekennzeichnet, dass** die oder jede vertiefte Form (9, 11) des anderen Gehäuses (2) durch Formen erzielt wird, wobei dieses andere Gehäuse (2) seinerseits ebenfalls ein Formteil ist, beispielsweise aus Aluminium für den Fall eines Hauptlenkungsgehäuses.

8. Vorrichtung zum Zusammenbauen von Gehäusen nach Anspruch 1, angewendet auf das Zusammenbauen von zwei Gehäusen, von denen eines (3) einen Schutzrand (7) umfasst, der über die Verbindungsebene (P) übersteht und diese umgibt, **dadurch gekennzeichnet, dass** die Mittel zum Positionieren und Orientieren mindestens eine nach außen oder nach innen vorstehende lokale Verformung (12) umfassen, die auf dem Schutzrand (7) vorgesehen ist, während das andere Gehäuse (2) mindestens eine entsprechende erhabene oder vertiefte Form aufweist.

9. Vorrichtung zum Zusammenbauen von Gehäusen nach Anspruch 8, angewendet auf die Montage eines Drehmomentsensorgehäuses (3) oder eines Winkelsensorgehäuses aus Kunststoff auf einem Hauptlenkungsgehäuse (2), **dadurch gekennzeichnet, dass** die oder jede nach außen oder nach innen vorstehende Verformung (12) mit dem Schutzrand (7) des betreffenden Gehäuses (3) direkt durch Formen erzielt wird.

## Claims

1. A device for assembling casings for motor vehicle steering system, in particular a device for assembling a casing (3) of torque sensor or of angle sensor on a main steering casing (2), in a power steering system, the assembling of the two casings (2, 3) being carried out according to a junction plane (P) particularly by means of screws, preferably with interposition of sealing means, **characterized in that** the two casings (2, 3) to be assembled include, in the junction plane zone (P), complementary means (8, 9 ; 10, 11; 12, 13), forming a polarizing system, which cooperate, during the mounting of a casing (3) on the other (2), for positioning and orienting one of the casings with respect to the other.

2. The device for assembling casings according to claim 1, **characterized in that** one of the casings (3) to be assembled includes, in the junction plane zone (P), at least a raised shape (8, 10) exceeding from the junction plane (P), while the other casing (2) presents at least a complementary hollow shape (9, 11) intended to receive the corresponding raised shape (8, 10).

3. The device for assembling casings according to claim 2, **characterized in that** the raised shape of one of the casings (3) to be assembled is composed of a rib (8) of this casing (3), extending perpendicularly to the junction plane (P), while the complementary hollow shape of the other casing (2) is a notch (9) able to receive the rib (8).

4. The device for assembling casings according to claim 2, **characterized in that** the raised shape of one of the casings (3) to be assembled is composed of a pin (10) of this casing (3), exceeding perpendicularly to the junction plane (P), while the complementary hollow shape of the other casing (2) is a notch or a housing (11) able to receive the pin (10).

5. The device for assembling casings according to any of claims 2 to 4, **characterized in that** the engagement of the or each raised shape (8, 10) of one of the casings (3) to be assembled, in the complementary hollow shape (9, 11) of the other casing (2) is provided with a clearance.

6. The device for assembling casings according to any of claims 2 to 5, **characterized in that** the or each raised shape (8, 10) of one of the casings (3) to be assembled is obtained directly by molding, during the manufacturing of this casing (3), particularly in the case of a sensor casing with plastic material.

7. The device for assembling casings according to claim 6, **characterized in that** the or each hollow shape (9, 11) of the other casing (2) is obtained by molding, this other casing (2) being also a molded piece, for example with aluminum in the case of a main steering casing.

8. The device for assembling casings according to claim 1, applied to the assembling of two casings one of which (3) includes a protective collar (7) exceeding from the junction plane (P) by surrounding it, **characterized in that** the positioning and orienting means comprise at least one local deformation (12) protruding outwardly or inwardly, provided on the protective collar (7), while the other casing (2) presents at least one raised or hollow corresponding shape (13).

9. The device for assembling casings according to claim 8, applied to the mounting of a casing (3) of torque sensor or of angle sensor casing with plastic material on a main steering casing (2), **characterized in that** the or each deformation (12) protruding outwardly or inwardly is obtained directly by molding, with the protective collar (7) of the casing (3) concerned.
